Europäisches Patentamt

European Patent Office

Office européen des brevets

(19)

(11) Publication number : **0 459 562 B1**

(12) # EUROPEAN PATENT SPECIFICATION

(45) Date of publication of patent specification :
**15.12.93 Bulletin 93/50**

(51) Int. Cl.⁵ : **A23L 1/19**

(21) Application number : **91201218.4**

(22) Date of filing : **22.05.91**

(54) **Cooking cream.**

The file contains technical information
submitted after the application was filed and
not included in this specification

(30) Priority : **31.05.90 SE 9001964**

(43) Date of publication of application :
**04.12.91 Bulletin 91/49**

(45) Publication of the grant of the patent :
**15.12.93 Bulletin 93/50**

(84) Designated Contracting States :
**AT BE CH DE DK ES FR GB GR IT LI NL SE**

(56) References cited :
**DD-A- 232 191
DE-A- 2 247 081
DE-A- 3 002 037
GB-A- 1 346 645
US-A- 3 716 378
US-A- 3 944 680
US-A- 4 748 028
Product specification of improved gelatin
"Extraco"
PATENT ABSTRACT OF JAPAN, vol. 8, no.
52(C-213)(1489), 9th March 1984; &
JP-A-58209947**

(56) References cited :
**DATABASE WPI/DERWENT accession no.
78-71268A (40), Derwent Publications Ltd, Lon-
don GB; & JP-A-53075364
CHEMICAL ABSTRACTS, vol. 104, no. 1,
January 1986, p. 442, right-hand col. no.
4862w, Columbus, Ohio, US; & JP-A-6094069
PATENT ABSTRACTS OF JAPAN, vol. 10, no.
166(C-353)(2222), 13th June 1986, & JP-
A-6121049**

(73) Proprietor : **UNILEVER N.V.
Weena 455
NL-3013 AL Rotterdam (NL)**
(84) **BE CH DE DK ES FR GR IT LI NL SE AT**
Proprietor : **UNILEVER PLC
Unilever House Blackfriars P.O. Box 68
London EC4P 4BQ (GB)**
(84) **GB**

(72) Inventor : **Svensson, Pia
Banmästaregarden 16
S-222 48 Lund (SE)**
Inventor : **Persson, Helena
Anslagsvägen 3
S-222 47 Lund (SE)**

(74) Representative : **Hartong, Richard Leroy et al
Unilever N.V. Patent Division P.O. Box 137
NL-3130 AC Vlaardingen (NL)**

## Description

Cooking creams are used in the preparation of many different types of food products, e.g. in order to dress up cooked food like meat, fish or vegetables, but also as a medium in which the food products are stored for some time, e.g. such as a herring sauce, and in which they can be warmed up.

So far, only cooking creams having a high SAFA/PUFA weight ratio of the fatty acid moieties of the fat component are known. Here, high means a SAFA/PUFA ratio of about 10 or higher.

In US 3 944 680 whippable creams are disclosed comprising water-continuous fat emulsions, wherein a globular protein must be incorporated. However, nothing is disclosed about a cooking cream.

From DE 2 247 081 a coffee whitener is known, wherein 4.5-9.5% vegetable fat is incorporated, which fat has a PUFA content of at least 40%. However, this composition concerns coffee whiteners and not cooking creams, while the fat content is lower than in our compositions.

In the general trend towards healthier food products, there was a clear need of cooking creams having a low SAFA/PUFA weight ratio for their fat component. It should be understood here that an all trans-unsaturated fat is also considered a SAFA fat.

However, it was just not possible to use a fat or a fat blend with the desired SAFA/PUFA ratio since this gave rise to problems with respect to the viscosity and/or the aroma of the cooking creams.

Therefore, the object was to find a cooking cream comprising an aqueous emulsion of a fat or fat blend, also containing milk proteins, emulsifier(s), thickener(s) and flavours having an improved fat phase (= SAFA/PUFA) and displaying a good viscosity and a good taste.

The cooking cream according to the invention therefore comprises aqueous fat emulsions, also containing milk proteins, emulsifiers, thickener and flavours, wherein the emulsion consists of 15-35 wt.% of fat having a weight ratio of saturated fatty acid moieties : polyunsaturated fatty acid moieties (= SAFA : PUFA) of less than 4.0, preferably less than 1.0, in particular less than 0.6, the fatty acid moieties being derived from fatty acids having 8-22 carbon atoms; so much of a milk protein-containing compound that an amount of milk protein equivalent to that present in 5-15 wt.% of skimmed milk powder is present; an improved gelatin as thickener; 0.4-1.0 wt.% of an emulsifier selected from monoglycerides having a long carbon chain or polyglycerol sorbate esters; 0.1-1.4 wt.% of a flavour composition and/or 0.1-2.0 wt.% of a starter distillate and balance water to 100%.

The best cooking creams contain 17-30 wt.%, preferably 24-28 wt.% of fat. The fat blends that can be used can either be a single fat blend having a high PUFA content (up to 100%) or a blend of fats rich in PUFA, such as rapeseed oil, sunflower oil and soybean oil and fats rich in SAFA, such as hardened rapeseed oil, hardened soybean oil and hardened coconut oil. The preferred fat blend consists of rapeseed oil with a PUFA content of at least 30% and hardened soybean oil with a SAFA content of at least 20%.

In the cooking creams also other ingredients must be present. So, the cooking creams according to the invention preferably contain so much of milk proteins as to be equivalent to 7-10 wt.% of skimmed milk powder.

In order to obtain the desired viscosity, the cooking cream must contain improved gelatin as thickener. Useful amounts, especially for an improved gelatin (N° 722-18), are 2-8 wt.%, although an amount of 0.6 wt.% also gives an excellent product (cf. Example).

As the cooking cream is an emulsion, the presence of emulsifiers in the cream is required. Very useful emulsifiers are monoglycerides of fatty acids with a long carbon chain or polyglycerol sorbate esters. These emulsifiers are present in amounts of 0.4-1.0 wt.%, preferably 0.6-0.8 wt.%.

The taste of the cooking cream is adjusted by using flavours. It is preferred to use 0.1-1.4 wt.%, in particular 0.2-0.8 wt.%, of a flavour composition that comprises a crème fraiche flavour and/or a butter cream flavour.

Another flavour compound that can be used is a starter distillate (0.1-2.0 wt.%) to flavour the composition to a desired degree. Lactic acid is used to adjust the pH of the composition.

Part of the invention is also a food product that comprises at least partly the cooking cream according to the invention.

The cooking creams are processed in the normal way described for the preparation of cooking creams in the textbooks.

## EXAMPLE

A cooking cream was prepared by making an emulsion of the following composition, in the following way :

All ingredients, with the exception of lactic acid, were mixed in a high-speed mixer at 70°C. The pH was adjusted to 4.4 by adding lactic acid. The mixture was pasteurized for 15 seconds at 95°C. After cooling to 60°C, the mixture was homogenized, using a pressure of 50 bar. The mixture was packed in an aseptic tetra brik after it was cooled to 30°C.

|                          | wt.%  |
|--------------------------|-------|
| Water                    | 62.5  |
| Hardened soybean oil 1)  | 13.6  |
| Rapeseed oil 2)          | 13.6  |
| Emulsifier               | 0.8   |
| Thickeners 3)            | 0.6   |
| Skimmed milk powder      | 8.0   |
| Lactic acid              | 0.7   |
| Flavours 4)              | 0.25  |
| Starter distillate       | 0.6   |
|                          | 100   |

1) SAFA content 21.1%; PUFA content 0%
2) SAFA content 7.3%; PUFA content 31.5%
3) Improved gelatin N° 722-18
4) Mixture of crème fraîche flavour FC 963025
   and butter cream flavour 1 594 2220

This cooking cream had a SAFA : PUFA ratio of 0.9. The taste of the cream was excellent, while the viscosity of the cream was good.

**Claims**

1. Pasteurized cooking cream comprising an aqueous emulsion of a fat or fat blend, also containing milk proteins, emulsifiers, thickener and flavours, wherein the emulsion consists of :
   - 15-35 wt.% of a fat having a weight ratio of saturated fatty acid moieties : unsaturated fatty acid moieties (= SAFA : PUFA) of less than 4.0, the fatty acid moieties being derived from fatty acids having 8-22 carbon atoms;
   - so much of a milk protein-containing compound that an amount of milk protein equivalent to that present in 5-15 wt.% of skimmed milk powder is present;
   - an improved gelatin as thickener;
   - 0.4-1.0 wt.% of an emulsifier selected from monoglycerides of fatty acids having a long carbon chain or polyglycerol sorbate esters;
   - 0.1-1.4 wt.% of a flavour composition and/or 0.1-2.0 wt.% of a starter distillate and balance water to 100%.

2. Cooking cream according to Claim 1, wherein the SAFA : PUFA ratio is less than 1.0.

3. Cooking cream according to Claims 1 and 2, wherein the SAFA : PUFA ratio is less than 0.6.

4. Cooking cream according to Claims 1-3, wherein the fat content of the cream is 17-30 wt.%.

5. Cooking cream according to Claims 1-4, wherein the fat content of the cream is 24-28 wt.%.

6. Cooking cream according to Claim 1, wherein the flavour composition consists of crème fraîche flavours and/or butter cream flavours.

7. Cooking cream according to Claims 1-5, wherein the fat blend consists of a mixture of fats rich in PUFA and fats rich in SAFA.

8. Cooking cream according to Claim 7, wherein the fats rich in PUFA are rapeseed oil, sunflower oil and/or soybean oil.

9. Cooking cream according to Claim 7, wherein the fats rich in SAFA are hardened soybean oil, hardened rapeseed oil and/or hardened coconut oil.

10. Food products comprising at least partly a cooking cream according to Claims 1-9.

**Patentansprüche**

1. Pasteurisierte Sahne zum Kochen, umfassend eine wäßrige Emulsion eines Fettes oder Fettgemisches, die ferner Milchproteine, Emulgatoren, ein Verdickungsmittel und Aromastoffe enthält, worin die Emulsion besteht aus:

15 bis 35 Gew.-% eines Fettes mit einem Gewichtsverhältnis von gesättigten Fettsäureteilen zu ungesättigten Fettsäureteilen (= SAFA : PUFA) von weniger als 4,0, wobei die Fettsäureteile von Fettsäuren mit 8 bis 22 Kohlenstoffatomen abgeleitet sind,

so viel einer Milchprotein enthaltenden Verbindung, daß eine Menge an Milchprotein vorliegt, die derjenigen äquivalent ist, die in 5 bis 15 gew.-%igem Magermilchpulver vorliegt,

einer verbesserten Gelatine als Verdickungsmittel,

0,4 bis 1,0 Gew.-% eines Emulgators, ausgewählt aus Monoglyceriden von Fettsäuren langer Kohlenstoffkette oder Polyglycerolsorbatestern,

0,1 bis 1,4 Gew.-% einer Aromazusammensetzung und/oder 0,1 bis 2,0 Gew.-% eines Starterdestillates, wobei der Rest auf 100 % aus Wasser besteht.

2. Kochsahne nach Anspruch 1, worin das SAFA:PUFA-Verhältnis weniger als 1,0 beträgt.

3. Kochsahne nach den Ansprüchen 1 und 2, worin das SAFA-PUFA-Verhältnis weniger als 0,6 beträgt.

4. Kochsahne nach den Ansprüchen 1 bis 3, worin der Fettgehalt der Sahne 17 bis 30 Gew.-% beträgt.

5. Kochsahne nach den Ansprüchen 1 bis 4, worin der Fettgehalt der Sahne 24 bis 28 Gew.-% beträgt.

6. Kochsahne nach Anspruch 1, worin die Aromazusammensetzung aus Crème fraîche-Aromen und/oder Buttersahnearomen besteht.

7. Kochsahne nach den Ansprüchen 1 bis 5, worin das Fettgemisch aus einer Mischung von an PUFA reichen Fetten und an SAFA reichen Fetten besteht.

8. Kochsahne nach Anspruch 7, worin die an PUFA reichen Fette Rapsöl, Sonnenblumenöl und/oder Sojaöl sind.

9. Kochsahne nach Anspruch 7, worin die an SAFA reichen Fette gehärtetes Sojaöl, gehärtetes Rapsöl und/oder gehärtetes Kokosnußöl sind.

10. Nahrungsmittelprodukt, das mindestens teilweise eine Kochsahne gemäß den Ansprüchen 1 bis 9 enthält.

**Revendications**

1. Crème de cuisine pasteurisée comprenant une émulsion aqueuse de graisse ou d'un mélange de graisses, contenant également des protéines de lait, des émulsifiants, un épaississant et des aromatisants, l'émulsion comprenant:
   - 15 à 35% en poids d'une graisse ayant un rapport pondéral de fragments d'acides gras saturés aux fragments d'acides gras insaturés (=SAFA:PUFA) de moins de 4,0, les fragments d'acides gras provenant des acides gras contenant de 8 à 22 atomes de carbone ;
   - une quantité d'un composé contenant des protéines de lait telle qu'une quantité de protéines de lait équivalente à celle présente dans 5 à 15% en poids de lait écrémé en poudre soit présente ;
   - une gélatine améliorée à titre d'épaississant;
   - 0,4 à 1,0% en poids d'un émulsifiant choisi parmi les monoglycérides d'acides gras ayant une longue chaîne de carbone ou des sorbiates de polyglycérol ;
   - 0,1 à 1,4% en poids d'une composition aromatisante et/ou 0,1 à 2,0% en poids d'un distillat de départ,

4

le complément étant de l'eau jusqu'à 100%.

2.  Crème de cuisine selon la revendication 1, dans laquelle le rapport SAFA:PUFA est inférieur à 1,0.

3.  Crème de cuisine selon les revendications 1 et 2, dans laquelle le rapport SAFA:PUFA est inférieur à 0,6.

4.  Crème de cuisine selon les revendications 1 à 3, dans laquelle la teneur en graisse de la crème est de 17 à 30% en poids.

5.  Crème de cuisine selon les revendications 1 à 4, dans laquelle la teneur en graisse de la crème est de 24 à 28% en poids.

6.  Crème de cuisine selon la revendication 1, dans laquelle la composition aromatisante comprend des saveurs de crème fraîche et/ou des saveurs de crème de beurre.

7.  Crème de cuisine selon les revendications 1 à 5, dans laquelle le mélange de graisses est un mélange de graisses riche en PUFA et de graisses riches en SAFA.

8.  Crème de cuisine selon la revendication 7, dans laquelle les graisses riches en PUFA sont l'huile de colza, l'huile de tournesol et/ou l'huile de soja.

9.  Crème de cuisine selon la revendication 7, dans laquelle les graisses riches en SAFA sont l'huile de soja durcie, l'huile de colza durcie et/ou l'huile de coprah durcie.

10. Produits alimentaires comprenant au moins partiellement une crème de cuisine selon les revendications 1 à 9.